(19) Europäisches Patentamt
European Patent Office
Office européen des brevets

(11) Veröffentlichungsnummer: **0 389 433 A1**

(12) **EUROPÄISCHE PATENTANMELDUNG**

(21) Anmeldenummer: **90810203.1**

(22) Anmeldetag: **14.03.90**

(51) Int. Cl.[5]: **C08K 13/02, C08L 63/00, C08L 75/04, //(C08K13/02, 3:22,5:527),(C08K13/02,3:22, 5:5398)**

(30) Priorität: **22.03.89 CH 1063/89**

(43) Veröffentlichungstag der Anmeldung: **26.09.90 Patentblatt 90/39**

(84) Benannte Vertragsstaaten: **CH DE ES FR GB IT LI NL SE**

(71) Anmelder: **CIBA-GEIGY AG**
**Klybeckstrasse 141**
**CH-4002 Basel(CH)**
(84) **CH ES FR GB IT LI NL SE**

Anmelder: **CIBA-GEIGY GmbH**
**Oeflinger Strasse 44**
**D-7867 Wehr/Baden(DE)**
(84) **DE**

(72) Erfinder: **Schwab, Heinz, Dr.**
**Drosselweg 21**
**D-7867 Wehr/Baden(DE)**

(54) **Flammgehemmte Reaktionsharzmassen.**

(57) Reaktionsharzmassen enthaltend als Flammhemmer eine Mischung aus

a) einem Hydroxid eines Metalls der 2. oder 13. Gruppe des Periodensystems und
b) einer phosphor-organischen Verbindung der allgemeinen Formel I

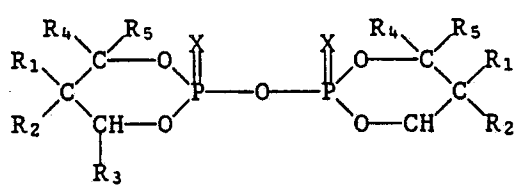

(I),

worin
X unabhängig voneinander Sauerstoff oder Schwefel,
$R_1$ unabhängig voneinander Wasserstoff, einen Alkylrest mit 1 - 4 C-Atomen oder Phenyl,
$R_2$ unabhängig voneinander Wasserstoff, einen Alkylrest mit 1 - 4 C-Atomen, oder
$R_1$ und $R_2$ zusammen mit dem gemeinsamen C-Atom einen Cyclohexyliden- oder Cyclohexenylidenring,
$R_3$ und $R_5$ unabhängig voneinander Wasserstoff oder einen Alkylrest mit 1 - 4 C-Atomen,
$R_4$ unabhängig voneinander Wasserstoff oder Methyl darstellen, wobei mindestens einer der Substituenten $R_1$, $R_2$, $R_3$, $R_4$ und $R_5$ von Wasserstoff verschieden ist, und wenn $R_1$ und $R_2$ einen Ring zusammen mit dem gemeinsamen C-Atom bilden, $R_3$, $R_4$ und $R_5$ immer Wasserstoff bedeuten, eignen sich z.B. als Umhüllungs-Systeme für Elektro- oder Elektronikbauteile.

EP 0 389 433 A1

# Flammgehemmte Reaktionsharzmassen

Die vorliegende Erfindung betrifft flammgehemmte Reaktionsharzmassen enthaltend eine Mischung aus einem Metallhydroxid und einer phosphororganischen Verbindung, sowie die Verwendung von solchen Mischungen zur Flammhemmung von Reaktionsharzmassen.

Aus der US-A 4,220,472 sind Dioxaphosphinanoxide als Flammschutzmittel für Polymere, insbesondere für Cellulose, bekannt. Weiter beschreibt die US-A 4,219,607 Hochspannungsisoliermassen, die einen die Kriechwegbildung verhindernden Zusatz sowie als Erosionshemmer eine phosphorhaltige Verbindung enthalten. Ferner sind aus der US-A 4,668,718 selbstlöschende, kriechstromfeste Epoxidharzformmassen bekannt, die Aluminiumhydroxid und Calciumphosphat als flammhemmende Komponenten enthalten.

Die Flammwidrigkeit von Reaktionsharzmassen wird im allgemeinen verbessert durch Reduzierung des organischen und somit brennbaren Anteils; d.h. durch Zugabe von nicht resp. schwerbrennbaren Füllstoffen wie z.B. Quarzmehl, Glas, Wollastonit, etc. Allerdings muss der Füllstoffanteil sehr hoch gewählt werden, um einen ausreichenden Flammschutz zu bedingen, was oft zu unlösbaren Problemen bei der Herstellung und Verarbeitung der Reaktionsharzmassen führt.

Eine weitere Möglichkeit ist der Zusatz von Flammschutzmitteln zu den Reaktionsharzmassen. In Frage kommen anorganische Zusätze wie beispielsweise Borverbindungen oder Metallhydroxide. Auch hier sind grosse Anteile an solchen Zusätzen erforderlich, was sich ebenfalls nachteilig auf die Herstellung und Verarbeitung auswirkt. Die Verwendung von halogenierten Verbindungen, wie beispielsweise bromierte Bisphenol-A-Epoxidharze oder bromierte Anhydridhärter, die meist in ihrer flammhemmenden Wirkung durch einen Synergisten wie z.B. $Sb_2O_3$ unterstützt werden, hat den schwerwiegenden Nachteil, dass im Brandfall Halogen wasserstoff freigesetzt wird. Dieser ist nicht nur toxikologisch bedenklich, sondern er besitzt ein extrem grosses Korrosions-Potential, was im Brandfall einer elektrischen, insbesondere jedoch einer elektronischen, Einheit zu schwerwiegenden Sekundärschäden durch elektrochemische Korrosion führen kann.

Der Einsatz von phosphor-organischen Verbindungen zur Flammhemmung, welche nicht in den Reaktionsharzformstoff eingebaut werden, bedingt eine Art Weichmachereffekt, was zu einer erheblichen Einbusse an mechanischen und elektrischen Eigenschaften der so flammhemmend behandelten Reaktionsharzformstoffe führt. Z.B. werden die Festigkeitswerte bzw. die Glasumwandlungstemperatur aufgrund der weichmachenden Wirkung der phosphororganischen Verbindung erniedrigt. Zudem sind diese Verbindungen meist hydrolyseinstabil, was zu einer erhöhten Wasseraufnahme des Reaktionsharzformstoffes bei gleichzeitiger Bildung von verschiedenen Phosphorsäureverbindungen führt.

Es wurde nun überraschend eine flammhemmende Mischung für den Einsatz in Reaktionsharzmassen gefunden, welche deren Verarbeitbarkeit nicht beeinträchtigt und die zu einer Erhöhung der Flammwidrigkeit der Formstoffe führt, ohne jedoch deren Eigenschaften, wie thermische Beständigkeit, mechanische Festigkeit oder Wasseraufnahme, nachteilig zu beeinflussen.

Die vorliegende Erfindung betrifft Reaktionsharzmassen enthaltend als Flammhemmer eine Mischung aus

a) einem Hydroxid eines Metalls der 2. oder 13. Gruppe des Periodensystems und

b) einer phosphor-organischen Verbindung der allgemeinen Formel I

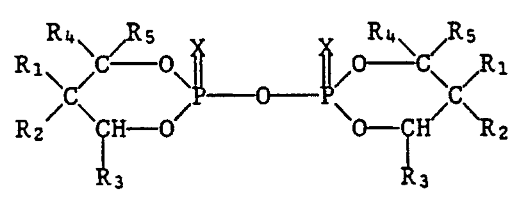 (I),

worin

X unabhängig voneinander Sauerstoff oder Schwefel,

$R_1$ unabhängig voneinander Wasserstoff, einen Alkylrest mit 1 - 4 C-Atomen oder Phenyl,

$R_2$ unabhängig voneinander Wasserstoff, einen Alkylrest mit 1 - 4 C-Atomen, oder

$R_1$ und $R_2$ zusammen mit dem gemeinsamen C-Atom einen Cyclohexyliden- oder Cyclohexenylidenring,

$R_3$ und $R_5$ unabhängig voneinander Wasserstoff oder einen Alkylrest mit 1 - 4 C-Atomen,

$R_4$ unabhängig voneinander Wasserstoff oder Methyl darstellen, wobei mindestens einer der Substituenten

$R_1$, $R_2$, $R_3$, $R_4$ und $R_5$ von Wasserstoff verschieden ist, und wenn $R_1$ und $R_2$ einen Ring zusammen mit dem gemeinsamen C-Atom bilden, $R_3$, $R_4$ und $R_5$ immer Wasserstoff bedeuten.

Bedeuten $R^1$, $R^2$, $R^3$ und $R^5$ einen Alkylrest mit 1 - 4 C-Atomen, so kann dieser Rest verzweigt oder geradkettig sein und beispielsweise Methyl, Ethyl, n-Propyl, Isopropyl, n-Butyl, sec.-Butyl, Isobutyl oder tert. Butyl, bevorzugt jedoch Methyl oder Ethyl, insbesondere Methyl, bedeuten.

Bevorzugt werden Verbindungen der Formel I, worin $R^1$ und $R^2$ je unabhängig voneinander Wasserstoff oder Alkyl mit 1 - 4 C-Atomen, oder $R^1$ und $R^2$ zusammen mit dem gemeinsamen C-Atom einen Cyclohexyliden- oder Cyclohexenylidenring und $R^3$, $R^4$ und $R^5$ je Wasserstoff bedeuten.

Besonders bevorzugt werden Verbindungen der Formel I, worin $R^1$ und $R^2$ je Alkyl mit 1 - 4 C-Atomen, insbesondere Methyl, bedeuten.

Ganz speziell bevorzugt werden als Verbindungen der Formel I Bis-(2-thiono-5,5-dimethyl-1,3,2-dioxaphosphinan-2-yl)oxid und Bis-(2-oxo-5,5-dimethyl-1,3,2-dioxaphosphinan-2-yl)oxid eingesetzt.

Die Bezeichnung der Gruppen des Periodensystems entspricht der neuen Notierung, wie sie in Chem. and Eng. News 63(5), 27, (1985) beschrieben ist.

Die als Komponente a) der flammhemmenden Mischung in Frage kommenden Metallhydroxide sind z.B. Magnesiumhydroxid, Calciumhydroxid, Borhydroxid oder Aluminiumhydroxid. Bevorzugt sind Magnesiumhydroxid und Aluminiumhydroxid oder ein Gemisch der beiden Hydroxide.

Die Herstellung der Komponenten a) und b) der flammhemmenden Mischung erfolgt nach an sich bekannte Methoden. Die Metallhydroxide a) sind meist kommerziell erhältlich. Die phosphor-organischen Verbindungen können z.B. nach der in der US-A 4,220,472 beschriebenen Methode hergestellt werden und sind auch z.T. im Handel erhältlich.

Die Menge der einzelnen Komponenten bezogen auf das Gesamtgewicht der Reaktionsharzmasse beträgt zweckmässig für die Komponente a) bis zu 70 Gew.-%, bevorzugt jedoch 20 - 60 Gew.-%, insbesondere 30 - 50 Gew.-%; und für die Komponente b) 2 - 40 Gew.-%, bevorzugt jedoch 2 - 20 Gew.-%, insbesondere 5 - 15 Gew.-%. Dabei beträgt der Gehalt an Komponenten a) und b) zusammen höchstens 85 Gew.-%, bevorzugt 70 Gew.-%, bezogen auf das Gesamtgewicht der Reaktionsharzmasse.

Die erfindungsgemässe Mischung ist als Flammhemmer für Reaktionsharzmassen sehr gut geeignet. Besonders geeignet als Reaktionsharze sind Epoxidharze und Polyurethanharze. Die erfindungsgemäss flammgehemmten Reaktionsharzmassen werden vorzugsweise als Umhüllungs-Systeme für Elektro- oder Elektronik-Verguss-Systeme eingesetzt oder finden Verwendung in Epoxid- oder Polyurethanschäumen. Dabei kann es sich bei der Reaktionsharzmasse um flüssige oder pulverförmige Massen handeln.

Als Epoxidharze eignen sich alle Typen von Epoxidharzen, wie beispielsweise solche, die direkt an Sauerstoff-, Stickstoff- oder Schwefelatome gebundene Gruppen der Formel

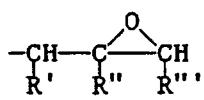

,

worin entweder $R'$ und $R'''$ je ein Wasserstoffatom darstellen, in welchem Fall $R''$, dann ein Wasserstoffatom oder eine Methylgruppe bedeutet, oder $R'$ und $R'''$ zusammen $-CH_2CH_2-$ oder $-CH_2CH_2CH_2-$ darstellen, in welchem Fall $R''$ dann ein Wasserstoffatom bedeutet, enthalten.

Als Beispiele solcher Harze seien Polyglycidyl- und Poly($\beta$-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder $\beta$-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure und von aromatischen Polycarbonsäuren wie Phthalsäure, Isophthalsäure und Terephthalsäure ableiten.

Weitere Beispiele sind Polyglycidyl- und Poly-($\beta$-methylglycidyl)-äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich mit Poly-(epichlorhydrin) aus acyclischen Alkoholen wie Aethylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3-und aus Alkoholen mit aromatischen Kernen wie N,N-Bis-(2-hydroxyäthyl)anilin und p,p'-Bis-(2-hydroxyäthylamino)-diphenylmethan herstellen. Man kann sie ferner aus einkernigen Phenolen wie Resorcin und Hydrochinon sowie mehrkernigen Phenolen wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden wie Formaldehyd, Acetaldehyd, Chloral und Furfurol, mit Phenolen wie Phenol selbst und durch Chloratome oder Alkylgruppen mit jeweils bis zu neun Kohlenstoffatomen ringsubstituiertem Phenol wie 4-Chlorphenol, 2-Methylphenol und 4-tert.-Butylphenol gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen, wie Anilin, n-Butylamin, Bis-(4-aminophenyl)-methan und Bis-(4-methyl-aminophenyl)-methan, erhalten werden, Triglycidylisocyanurat sowie N,N'-Diglycidylderivate von cyclischen Alkylenharnstoffen, wie Aethylenharnstoff und 1,3-Propylenharnstoff, und Hydantoinen, wie 5,5-Dimethylhydantoin.

Poly-(S-glycidyl)-verbindungen sind zum Beispiel die Di-S-glycidylderivate von Dithiolen wie Aethan-1,2-dithiol und Bis-(4-mercaptomethylphenyl)-äther.

Beispiele für Epoxidharze mit Gruppen der Formel

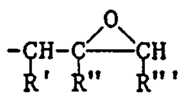 ,

worin R' und R''' zusammen eine $-CH_2CH_2-$Gruppe bedeuten, sind Bis-(2,3-epoxycyclopentyl)-äther, 2,3-Epoxycyclopentyl-glycidyläther, 1,2-Bis-(2,3-epoxycyclopentyloxy)-äthan und 3,4-Epoxycyclohexylmethyl-3',4'-epoxycyclohexancarboxylat.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidyläther/Glycidylester der Salicylsäure oder p-Hydroxybenzoesäure, N-Glycidyl-N'-(2-glycidyloxypropyl)-5,5-dimethylhydantoin und 2-Glycidyloxy-1,3-bis-(5,5-dimethyl-1-glycidylhydantoinyl-3)propan.

Gewünschtenfalls kann Epoxidharzgemische verwenden.

Bevorzugte Epoxidharze sind die Polyglycidyläther, Polyglycidylester und N,N'-Diglycidylhydantoine. Speziell bevorzugte Harze sind die Polyglycidyläther des 2,2-Bis-(4-hydroxyphenyl)-propans, des Bis-(4-hyd roxy-)-methans oder eines aus Formaldehyd und unsubstituiertem oder durch eine Alkylgruppe mit 1 - 9 C-Atomen substituiertem Phenol gebildeten Novolaks mit einem 0,5 val/kg übersteigenden 1,2-Epoxidgehalt.

Als Polyurethanharze eignen sich beispielsweise solche, die als Hauptbestandteil mehrfunktionelle Isocyanate und/oder Polyurethan-Präpolymere enthalten. Geeignet sind hier sowohl aromatische als auch aliphatische, monocyclische wie polycyclische, mehrfunktionelle Isocyanatverbindungen wie beispielsweise Hexan-1,6-diisocyanat, Cyclohexan-1,3-diisocyanat und Isomere, 4,4'-Dicyclohexylmethandiisocyanat, 3-Isocyanatomethyl-3,5,5-trimethylcyclohexylisocyanat, 1,3-Dimethylbenzol-ω,ω'-diisocyanat und Isomere, 1-Methylbenzol-2,4-diisocyanat und Isomere, Naphthalin-1,4-diisocyanat, Diphenyläther,4,4'-diisocyanat und Isomere, Diphenylsulfon-4,4-diisocyanat und Isomere sowie tri- oder höherfunktionelle Isocyanate, wie beispielsweise 3,3',4,4'-Diphenylmethantetraisocyanat. Ferner können auch Isocyanate verwendet werden, die in üblicher Weise mit Phenol, Kresol oder Caprolactam maskiert sind. Dimere und Trimere der genannten mehrwertigen Isocyanate sind ebenfalls einsetzbar. Derartige Polyisocyanate besitzen endständige freie Isocyanatgruppen und enthalten einen oder mehrere Uretdion- und/oder Isocyanuratringe. Verfahren zur Herstellung verschiedener Arten solcher Trimerer und Uretdione sind beispielsweise in den US-Patentschriften 3 494 888, 3 108 100 und 2 977 370 beschrieben.

Weitere verwendbare Polyisocyanate sind beispielsweise Toluylendiisocyanat oder Diphenylmethandiisocyanat. Besonders geeignet ist technisches Diphenylmethandiisocyanat mit einem Gehalt an höherfunktionellen Diisocyanaten und einer Funktionalität an Isocyanatgruppen grösser als 2. Ein weiteres geeignetes aliphatisches Diisocyanat ist Xylylendiisocyanat. Darüber hinaus kann eine Vielzahl aliphatischer Isocyanate der Funktionalität 2 und höher eingesetzt werden.

Nach einer weiteren Ausführungsform werden anstatt der mehrfunktionellen Isocyanatverbindungen Polyurethan-Präpolymere eingesetzt. Unter Präpolymeren werden hier die Addukte eines Ueberschusses mehrfunktioneller Isocyanate an mehrfunktionelle Alkohole, etwa die Umsetzungsprodukte eines der vorgenannten aromatischen oder aliphatischen Diisocyanate mit Aethylenglykol, Propylenglykol, Glycerin, Trimethylolpropan oder Pentaerythrit verstanden. Auch Umsetzungsprodukte von Diisocyanaten mit Polyätherpolyolen, z.B. Polyätherpolyolen auf Basis Polyäthylenoxid oder auf Basis Polypropylenoxid können als Präpolymere verwendet werden. Bevorzugt sind Polyurethan-Präpolymere auf Basis von Polyätherpolyolen mit Molgewichten zwischen 200 und 10000, insbesondere 500 und 3000. Dem Polyurethan-Fachmann sind eine grosse Anzahl derartiger Polyätherpolyole bekannt; sie werden von zahlreichen Herstellern angeboten und über ihr Molekulargewicht (Zahlenmittel), das aus Endgruppenbestimmungen errechenbar ist, charakterisiert. Weitere geeignete Polyätherpolyole sind Polyätherpolyole auf Basis Polytetrahydrofuran.

Anstelle von Polyätherpolyolen können auch Polyesterpolyole eingesetzt werden. Geeignete Polyesterpolyole sind Umsetzungsprodukte mehrfunktioneller Säuren mit mehrfunktionellen Alkoholen, beispielsweise Polyester auf Basis aliphatischer und/oder aromatischer Dicarbonsäuren und mehrfunktioneller Alkohole der Funktionalität 2-4. So können Polyester aus Adipinsäure, Sebacinsäure, Phthalsäure, Hydrophthalsäure und/oder Trimellitsäure einerseits und Aethylenglykol, Propylenglykol, Neopentylglykol, Hexanglykol, Glycerin und/oder Trimethylolpropan andererseits eingesetzt werden. Geeignet sind insbesondere Polyesterpolyole mit Molekulargewicht (Zahlenmittel) zwischen 500 und 5000, insbesondere zwischen 600 und 2000. Weitere geeignete Polyesterpolyole sind die Umsetzungsprodukte von Caprolacton mit Alkoholen der Funktionalität von 2-4, so beispielsweise das Additionsprodukt von 1-5 Mol Caprolacton an 1 Mol Aethylenglykol, Propylenglykol, Glycerin und/oder Trimethylolpropan.

Eine weitere geeignete Klasse mehrfunktioneller Alkohole sind Polybutadienole. Hierbei handelt es sich um Oligomere auf Basis Butadien, die als Endgruppen OH-Gruppen aufweisen. Geeignet sind hier Produkte im Molekulargewichtsbereich 200-4000, insbesondere 500-3000.

Bei der Herstellung der Polyurethan-Präpolymeren ist das Verhältnis von OH-Gruppen der Alkoholkomponente zu Isocyanatgruppen von Bedeutung. Dieses liegt im allgemeinen zwischen 1:2 und 1:10. Dabei werden mit höheren Isocyanatüberschüssen eher niedrigviskose Polyurethan-Präpolymere erhalten, während niedere Isocyanatüberschüsse hochviskose, meist nur noch spachtelbare Zubereitungen liefern.

Es ist dem Polyurethan-Fachmann bekannt, dass die Vernetzungsdichte und damit die Härte der Polyurethane mit der Funktionalität der Isocyanatkomponente oder auch des Polyols zunimmt. Es sei hier auf die allgemeine Fachliteratur verwiesen, z.B. auf die Monographie von Saunders und Frisch "Polyurethanes, Chemistry and Technology", Band XVI der Serie High Polymers "Interscience Publishers" New York-London, Teil I (1962) und Teil II (1964).

Die Herstellung der erfindungsgemässen Reaktionsharzmassen kann in üblicher Weise mit Hilfe bekannter Mischaggregate (z.B. Extruder, Rührer, Kneter, Walzenstühlen, Mühlen) erfolgen.

Die Verarbeitung zu Formteilen aller Art kann nach üblichen Verfahren unter Aushärtung erfolgen. Besonders geeignet ist die Verarbeitung nach dem Giessverfahren bzw. nach dem Vakuumgussverfahren.

Hergestellt werden zunächst 3 Stammpasten, welche in unterschiedlichen Mengen zum Einsatz kommen.

Stammpaste 1:

60 g Sandoflam® 5060 (der Firma Sandoz Huningue, Frankreich) der Formel

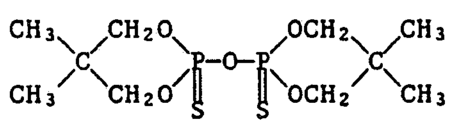

werden gemeinsam mit 100 g eines bei Raumtemperatur flüssigen, unmodifizierten Epoxidharzes auf der Basis von Bisphenol-A und Epichlorhydrin mit einem Epoxidgehalt von 5,25-5,40 Aequiv./kg auf einem Walzenstuhl (Typ DH-3 der Firma Drais, Deutschland) intensiv zu einer Stammpaste (master batch) vermischt.

Stammpaste 2:

60 g Sandoflam®5080 (der Firma Sandoz Huningue, Frankreich) der Formel

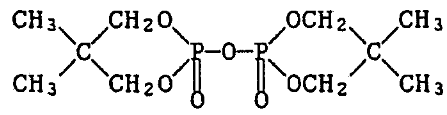

werden gemeinsam mit 100 g eines bei Raumtemperatur flüssigen, unmodifizierten Epoxidharzes auf der Basis von Bisphenol-A und Epichlorhydrin mit einem Epoxidgehalt von 5,25-5,40 Aequiv./kg auf einem Walzenstuhl (Typ DH-3 der Firma Drais, Deutschland) intensiv zu einer Stammpaste (master batch) vermischt.

Stammpaste 3:

10 g des Thixotropiemittels Silica R 202 (der Firma Degussa, Deutschland) werden gemeinsam mit 90 g eines bei Raumtemperatur flüssigen, unmodifizierten Epoxidharzes auf der Basis von Bisphenol-A und Epichlorhydrin mit einem Epoxidgehalt von 5,25-5,40 Aequiv./kg auf einem Walzenstuhl (Typ DH-3 der Firma Drais, Deutschland) intensiv zu einer Stammpaste (master batch) vermischt.

Beispiel 1:

61,3 g der Stammpaste 1 (enthaltend 23 g Sandoflam®5060 und 38,3 g Epoxidharz) und 177 g Aluminiumhydroxid (Apyral®2 der Firma Vereinigte Aluminiumwerke AG, Deutschland) werden mit 61,7 g eines bei Raumtemperatur flüssigen und unmodifizierten Epoxidharzes auf der Basis von Bisphenol A und Epichlorhydrin mit einem Epoxidgehalt von 5,25-5,40 Aequiv./kg mittels Dissolverrührer homogenisiert. Diese flammhemmend eingestellte Harzmasse wird unter Vakuum entgast (ca. 15 min. bei p = 5 mbar/Pumpenleistung ca. 40 l/min; Temperatur der Harzmasse T = 80° C).

Diese Harzmasse wird mit 90 g eines niedrigviskosen Anhydridhärters auf der Basis von Methyltetrahydrophthalsäureanhydrid mit einem Flügelrührer intensiv vermengt. Diese flammhemmend eingestellte Reaktionsharzmasse wird unter Vakuum entgast (ca. 15 min. bei p = 5 mbar/Pumpenleistung ca. 40 l/min; Temperatur der Masse T = 80° C). Anschliessend wird in 1,6 mm bzw. 3,2 mm vorgeheizte Plattenformen vergossen. Die Härtung erfolgt 1 h bei 100° C und 3 h bei 120° C.

Beispiel 2:

Analog zur Methode von Beispiel 1 werden verwendet:
41,3 g Stammpaste 1
74,3 g Epoxidharz
119,0 g Aluminiumhydroxid (Apyral®2)

Nach dem Evakuieren dieser Harzmasse entsprechend Beispiel 1 werden 30,0 g eines niedrigviskosen, cycloaliphatischen Polyaminhärters auf der Basis von 3,3′-Dimethyl-4,4′-diaminodicyclohexyl-methan zugegeben.

Diese flammhemmend eingestellte Reaktionsharzmasse wird unter Vakuum entgast (ca. 15 min. bei p = 5 mbar/Pumpenleistung ca. 40 l/min; Temperatur der Masse T = 60° C). Anschliessend wird in 1,6 mm bzw. 3,2 mm vorgeheizte Plattenformen vergossen. Die Härtung erfolgt 1 h bei 60° C und 2 h bei 120° C.

Beispiel 3:

Analog zur Methode von Beispiel 1 werden verwendet:
61,3 g Stammpaste 2
30,0 g Stammpaste 3
34,7 g Epoxidharz
177,0 g Aluminiumhydroxid (Apyral®2)

Nach dem Evakuieren dieser Harzmasse entsprechend Beispiel 1 werden 90,0 g eines niedrigviskosen Anhydridhärters auf der Basis von Methyltetrahydrophthalsäureanhydrid intensiv mit einem Flügelrührer

vermengt.

Diese flammhemmend eingestellte Reaktionsharzmasse wird unter Vakuum entgast (ca. 15 min. bei p = 5 mbar/Pumpenleistung ca. 40 l/min; Temperatur der Masse T = 80 °C). Anschliessend wird in 3,2 mm vorgeheizte Plattenformen vergossen. Die Härtung erfolgt 1 h bei 100 °C und 3 h bei 120 °C.

Beispiel 4:

Nach der Entformung werden die Prüfkörper der Beispiele 1 - 3 auf ihre Brennbarkeit nach der Norm von Underwriters Laboratories Inc. UL 94, dritte Ausgabe (Revision) vom 25. Sept. 1981 (Horizontale Brennbarkeitsprüfung) geprüft.

Als Proben dienen 3 Probekörper der Dimension 127 x 12,7 x 1,6 mm.

Weiter wird die Glasübergangstemperatur mit Hilfe der DSC-Methode (Differential Scanning Calorimetry) ermittelt.

Die Resultate sind in Tabelle 1 wiedergegeben.

Tabelle 1:

| Beispiel | 1 | 2 | 3 |
|---|---|---|---|
| Flammhemmung nach UL an 1,6 mm | HB | HB | HB |
| Flammhemmung nach UL an 3,2 mm | V-O | V-O | V-O |
| Glasübergangstemperatur Tg [°C] | 124 | 118 | 125 |
| Füllstoffgehalt total [Gew.-%] | 51,00 | 49,20 | 51,60 |
| Al(OH)-Gehalt [Gew.-%] | 45,00 | 43,50 | 45,00 |
| P-Gehalt [Gew.-%] | 1,05 | 1,02 | 1,05 |

Beispiel 5:

100 g eines trifunktionellen Polyetherpolyols (Baygal®K55 der Firma Bayer AG, Deutschland) werden ca. 90 Minuten bei einer Temperatur von 110 °C "entwässert" und anschliessend bis zur Blasenfreiheit (5 mbar, 5 Minuten) evakuiert. Nach dem Abkühlen werden 180 g Aluminiumhydroxid (Apyral®2 der Firma Vereinigte Aluminiumwerke AG, Deutschland) und 20 g Sandoflam®5060 (Firma Sandoz Huningue, Frankreich) intensiv eingerührt und diese Harzmasse evakuiert (ca. 10 min. bei p = 5 mbas/Pumpenleistung ca. 40 l/min.; Temperatur der Masse T = 40 °C).

Diese gefüllte Harzkomponente wird mit dem Härter, 25 g Methan-diphenyldiisocyanat (Baymidur®K88 der Firma Bayer AG, Deutschland) intensiv vermischt und evakuiert (ca. 10 min. bei p = 5 mbar/Pumpenleistung ca. 40 l/min.; Temperatur der Masse T = 40 °C).

Anschliessend wird diese Reaktionsharzmasse in 3 mm Plattenformen (Formentemperatur ca. 20 °C) vergossen und 15 h bei 40 °C ausgehärtet.

Nach der Entformung werden die Prüfkörper auf ihre Brennbarkeit nach dem Limiting-Oxygen-Index (ASTM 2683-77) geprüft.

Resultat: Limiting-Oxygen-Index: 30,2.

## Ansprüche

1. Reaktionsharzmasse enthaltend als Flammhemmer eine Mischung aus
   a) einem Hydroxid eines Metalls der 2. oder 13. Gruppe des Periodensystems und
   b) einer phosphor-organischen Verbindung der allgemeinen Formel I

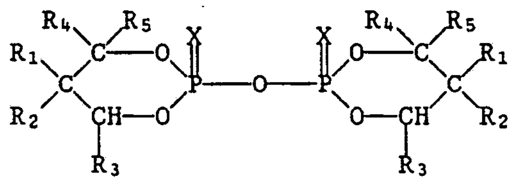

(I),

worin
X unabhängig voneinander Sauerstoff oder Schwefel,
$R_1$ unabhängig voneinander Wasserstoff, einen Alkylrest mit 1 - 4 C-Atomen oder Phenyl,
$R_2$ unabhängig voneinander Wasserstoff, einen Alkylrest mit 1 - 4 C-Atomen, oder
$R_1$ und $R_2$ zusammen mit dem gemeinsamen C-Atom einen Cyclohexyliden- oder Cyclohexenylidenring,
$R_3$ und $R_5$ unabhängig voneinander Wasserstoff oder einen Alkylrest mit 1 - 4 C-Atomen,
$R_4$ unabhängig voneinander Wasserstoff oder Methyl darstellen, wobei mindestens einer der Substituenten $R_1$, $R_2$, $R_3$, $R_4$ und $R_5$ von Wasserstoff verschieden ist, und wenn $R_1$ und $R_2$ einen Ring zusammen mit dem gemeinsamen C-Atom bilden, $R_3$, $R_4$ und $R_5$ immer Wasserstoff bedeuten.

2. Reaktionsharzmasse gemäss Anspruch 1, worin das Reaktionsharz ein Epoxidharz oder ein Polyurethanharz ist.

3. Reaktionsharzmasse gemäss Anspruch 1, worin das Metall in a) Aluminium oder Magnesium bedeutet.

4. Reaktionsharzmasse gemäss Anspruch 1, worin in der Verbindung der Formel I $R^1$ und $R^2$ je unabhängig voneinander Wasserstoff oder Alkyl mit 1 - 4 C-Atomen; oder $R^1$ und $R^2$ zusammen mit dem gemeinsamen C-Atom einen Cyclohexyliden- oder Cyclohexenylidenring und $R^3$, $R^4$ und $R^5$ je Wasserstoff bedeuten.

5. Reaktionsharzmasse gemäss Anspruch 4, worin in der Verbindung der Formel I $R^1$ und $R^2$ je Alkyl mit 1 - 4 C-Atomen bedeuten.

6. Reaktionsharzmasse gemäss Anspruch 5, worin in der Verbindung der Formel I $R^1$ und $R^2$ Methyl bedeuten.

7. Verwendung von Mischungen aus a) einem Metallhydroxid und b) einer phosphor-organischen Verbindung der allgemeinen Formel I gemäss Anspruch 1 zur Flammhemmung von Reaktionsharzmassen.

Patentansprüche für folgenden Vertragsstaat: ES

1.Verfahren zur Flammhemmung von Reaktionsharzmassen, dadurch gekennzeichnet, dass man eine Mischung aus
a) einem Hydroxid eines Metalls der 2. oder 13. Gruppe des Periodensystems und
b) einer phosphor-organischen Verbindung der allgemeinen Formel I

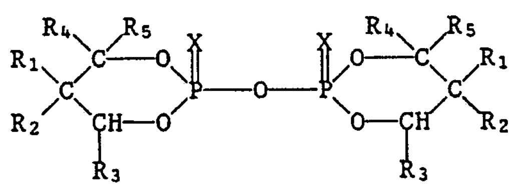

(I),

worin
X unabhängig voneinander Sauerstoff oder Schwefel,
$R_1$ unabhängig voneinander Wasserstoff, einen Alkylrest mit 1 - 4 C-Atomen oder Phenyl,
$R_2$ unabhängig voneinander Wasserstoff, einen Alkylrest mit 1 - 4 C-Atomen, oder
$R_1$ und $R_2$ zusammen mit dem gemeinsamen C-Atom einen Cyclohexyliden- oder Cyclohexenylidenring,
$R_3$ und $R_5$ unabhängig voneinander Wasserstoff oder einen Alkylrest mit 1 - 4 C-Atomen,
$R_4$ unabhängig voneinander Wasserstoff oder Methyl darstellen, wobei mindestens einer der Substituenten $R_1$, $R_2$, $R_3$, $R_4$ und $R_5$ von Wasserstoff verschieden ist, und wenn $R_1$ und $R_2$ einen Ring zusammen mit dem gemeinsamen C-Atom bilden, $R_3$, $R_4$ und $R_5$ immer Wasserstoff bedeuten, in die Reaktionsharzmasse einarbeitet.

2. Verfahren gemäss Anspruch 1, worin das Reaktionsharz ein Epoxidharz oder ein Polyurethanharz ist.

3. Verfahren gemäss Anspruch 1, worin das Metall in a) Aluminium oder Magnesium bedeutet.

4. Verfahren gemäss Anspruch 1, worin in der Verbindung der Formel I $R^1$ und $R^2$ je unabhängig voneinander Wasserstoff oder Alkyl mit 1 - 4 C-Atomen; oder $R^1$ und $R^2$ zusammen mit dem gemeinsamen C-Atom einen Cyclohexyliden- oder Cyclohexenylidenring und $R^3$, $R^4$ und $R^5$ je Wasserstoff bedeuten.

5. Verfahren gemäss Anspruch 4, worin in der Verbindung der Formel I $R^1$ und $R^2$ je Alkyl mit 1 - 4 C-Atomen bedeuten.

6. Verfahren gemäss Anspruch 5, worin in der Verbindung der Formel I $R^1$ und $R^2$ Methyl bedeuten.

7. Verwendung von Mischungen aus a) einem Metallhydroxid und b) einer phosphor-organischen Verbindung der allgemeinen Formel I gemäss Anspruch 1 zur Flammhemmung von Reaktionsharzmassen.

Europäisches Patentamt

# EUROPÄISCHER RECHERCHENBERICHT

Nummer der Anmeldung

EP 90 81 0203

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | US-A-4220472 (C.MAURICE ET AL.)<br>* Spalte 2, Zeilen 19 - 37 *<br>* Spalte 4, Zeile 25 *<br>--- | 1-7 | C08K13/02<br>C08L63/00<br>C08L75/04<br>//(C08K13/02,3:22,5:527)<br>(C08K13/02,3:22,5:5398) |
| A,D | EP-A-0181832 (CIBA-GEIGY AG)<br>* Anspruch 1 *<br>----- | 1-7 | |
| | | | **RECHERCHIERTE SACHGEBIETE (Int. Cl.5 )** |
| | | | C08K<br>C08L |

Der vorliegende Recherchenbericht wurde für alle Patentansprüche erstellt

| Recherchenort | Abschlußdatum der Recherche | Prüfer |
|---|---|---|
| DEN HAAG | 27 JUNI 1990 | HOFFMANN K.W. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument



EPO FORM 1503 03.82 (P0403)